(19) Europäisches Patentamt
European Patent Office
Office européen des brevets

(11) **EP 2 621 780 B1**

(12) **EUROPÄISCHE PATENTSCHRIFT**

(45) Veröffentlichungstag und Bekanntmachung des Hinweises auf die Patenterteilung:
**06.11.2019 Patentblatt 2019/45**

(51) Int Cl.:
*B60T 8/26* (2006.01)       *B60L 7/24* (2006.01)
*B60T 8/17* (2006.01)       *B60T 13/58* (2006.01)
*B60L 7/26* (2006.01)

(21) Anmeldenummer: **11757645.4**

(22) Anmeldetag: **19.09.2011**

(86) Internationale Anmeldenummer:
**PCT/EP2011/066196**

(87) Internationale Veröffentlichungsnummer:
**WO 2012/041731 (05.04.2012 Gazette 2012/14)**

(54) **VERFAHREN FÜR DIE STEUERUNG EINES KRAFTFAHRZEUGBREMSSYSTEMS**

METHOD FOR CONTROLLING A MOTOR VEHICLE BRAKE SYSTEM

PROCÉDÉ POUR LA COMMANDE D'UN SYSTÈME DE FREINAGE DE VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2010 DE 102010041853**

(43) Veröffentlichungstag der Anmeldung:
**07.08.2013 Patentblatt 2013/32**

(73) Patentinhaber: **Continental Teves AG & Co. OHG 60488 Frankfurt am Main (DE)**

(72) Erfinder:
• **BILLER, Harald**
  **65760 Eschborn (DE)**
• **SCHOENBOHM, Alexander**
  **60385 Frankfurt (DE)**

(56) Entgegenhaltungen:
**US-A- 5 707 115       US-A1- 2003 062 770
US-A1- 2010 105 520**

**Beschreibung**

Die Erfindung betrifft ein Verfahren gemäß Oberbegriff von Anspruch 1 und ein Kraftfahrzeugbremssystem gemäß Oberbegriff von Anspruch 13.

Regenerative Bremssysteme bei Kraftfahrzeugen ermöglichen es, zumindest einen Teil der beim Bremsen aufgebrachten Energie im Fahrzeug zu speichern und für den Antrieb des Fahrzeuges wiederzuverwenden. Dadurch kann der Energieverbrauch des Fahrzeuges insgesamt gesenkt und der Betrieb damit wirtschaftlicher gestaltet werden. Kraftfahrzeuge mit einem regenerativen Bremssystem weisen dazu in der Regel verschiedene Arten von Bremsaktuatoren auf.

Dabei werden in der Regel hydraulische Reibbremsen, wie sie aus gewöhnlichen Kraftfahrzeugen bekannt sind, und eine elektrisch-regenerative Bremse eingesetzt. Der Bremsdruck für die Reibbremsen wird wie bei konventionellen Reibbremsen über ein Bremsdruckerzeugungsmittel bzw. über die Bremspedalbewegung aufgebracht. Die elektrisch-regenerative Bremse ist in der Regel als im Generatorbetrieb angesteuerte elektrische Maschine(n) ausgebildet, über die zumindest ein Teil der gesamten Bremsleistung aufgebracht wird. Die gewonnene elektrische Energie wird in ein Speichermedium wie beispielsweise eine Bordbatterie ein- bzw. zurückgespeist und für den Antrieb des Kraftfahrzeugs wiederverwendet, wobei entweder eine geeignete Ansteuerung der elektrischen Maschine(n) oder eine Anzahl von mindestens einem getrennten Elektromotoren eingesetzt wird.

Konventionelle Bremssysteme, die ausschließlich Reibbremsen aufweisen, verzögern das Fahrzeug, indem in Abhängigkeit von der Stellung des Bremspedals mit oder ohne Hilfsenergie der Druck eines Bremsmittels aufgebaut wird, das von der oder den Reibbremsen aufgenommen wird, die daraufhin ein entsprechendes Bremsmoment auf die Räder ausüben. Die Pedalstellung korrespondiert also mit dem Bremsverhalten des Kraftfahrzeuges. Ausnahmen können bei Eingreifen von elektronischen Sicherheitssystemen, wie des elektrischen Stabilitätsprogramms (ESP) auftreten, die Einrichtungen zum selbständigen Bremsdruckaufbau, unabhängig von der Bremspedalsstellung, umfassen können.

Dieser klare Zusammenhang zwischen Pedalstellung und Bremsverhalten ist bei dem durch einen Generator aufgebauten Schleppmoment ohne weitere Maßnahmen nicht gegeben. Aus der WO 2004/101308 A1 ist ein Bremssystem sowie ein Verfahren für die Regelung eines Bremssystems eines Kraftfahrzeuges bekannt, das eine elektrisch-regenerative Bremse, insbesondere einen Generator, und eine Anzahl von mindestens einem Bremsdruckerzeugungsmittel über ein Bremsmittel angetriebene hydraulische Reibbremsen aufweist, dessen Gesamtverzögerung sich aus Verzögerungsanteilen der Reibbremsen und der elektrisch-regenerativen Bremse zusammensetzt. Um einen möglichst hohen Bremskomfort und ein angenehmes Bremsgefühl zu erzielen, wird beim Bremsen mit der elektrisch regenerativen Bremse Bremsmittel in einen Niederdruckspeicher abgeleitet.

Weiterhin nimmt bei konstanter Generatorleistung das von einem Generator aufgenommene Drehmoment mit steigender Geschwindigkeit deutlich ab, wobei unterhalb einer Grenzgeschwindigkeit von etwa 15 km/h keine Energierückgewinnung mehr möglich ist. Die DE 10 2004 044 599 A1 beschreibt ein Verfahren für die Regelung eines Bremssystems eines Kraftfahrzeugs, das eine elektrisch-regenerative Bremse, insbesondere einen Generator, und eine Anzahl von einem Bremsdruckerzeugungsmittel über ein Bremsmittel angetriebene hydraulische Reibbremsen aufweist. Bei Nachlassen des Bremsmoments der elektrisch-regenerativen Bremse, welches insbesondere bei Unterschreiten einer Mindestgeschwindigkeit auftritt, wird die gewünschte Gesamtverzögerung zumindest teilweise aufrecht erhalten, indem ein zusätzlicher Bremsdruckaufbau für die Reibbremsen mit einem weiteren hilfskraftunterstützten Bremsdruckerzeugungsmittel erfolgt, z.B. einer elektrischen Hydraulikpumpe.

Aus der WO2006/076999 A1 ist ein Verfahren für die Steuerung eines Bremssystems eines Kraftfahrzeuges bekannt, das einen elektrischen Generator und eine Anzahl von Reibbremsen aufweist, die Achsen des Kraftfahrzeugs zugeordnet sind, und dessen Gesamtverzögerung sich aus Verzögerungsanteilen des elektrischen Generators und der Reibbremsen zusammensetzt. Über eine Steuereinrichtung wird das Verhältnis der Sollverzögerungsanteile einer Anzahl von Bremsen zueinander verändert, indem aus dem Verhältnis von Istverzögerung zu Sollverzögerung ein Korrekturwert für eine Anzahl der Bremsen ermittelt wird, mit dem die Sollverzögerung dieser Bremsen beaufschlagt wird. Dieses Verfahren kompensiert beispielsweise eine Alterung der Reibbremsen.

Wird bei einer Fahrzeuggeschwindigkeit von 100 km/h ein Bremsvorgang begonnen, so steht nur eine geringe regenerative Bremsverzögerung zur Verfügung. Hält man das Verhältnis zwischen regenerativem und durch Reibbremsen erzeugtem Bremsmoment über den gesamten Bremsvorgang konstant, so beschränkt dies die zurückgewonnene elektrische Energie, d.h. der Wirkungsgrad der Energierückgewinnung, auch als Rekuperation bezeichnet, ist gering. Bei einer elektrohydraulischen regenerativen Bremsanlage, die Bremspedalbetätigung und Druckaufbau energetisch trennt, wird daher die Bremskraftverteilung zwischen Generator und Reibbremsen kontinuierlich angepasst, wobei also das hydraulisch aufgebaute Reibbremsmoment verringert wird. Wird eine konventionelle Bremsanlage verwendet, so ist ein einfacher Druckabbau an den Reibbremsen jedoch nicht ohne weiteres möglich.

Aus der US 2010/0105520 A1 ist ein Bremssystem für ein Fahrzeug bekannt, welches neben Reibbremsen an allen Rädern und einem Generator zusätzlich eine dritte Bremskrafterzeugungseinrichtung umfasst, die beispielsweise durch einen verstellbaren Heckspoiler realisiert sein kann. Wird die dritte Bremskrafterzeugungseinrichtung bzw.

der Heckspoiler geeignet verstellt, so kann die Bremskraft des Generators ohne Pedalrückwirkung angepasst werden.

Aufgabe der vorliegenden Erfindung ist es, den Wirkungsgrad der Rekuperation bei Verwendung konventioneller Reibbremsen zu erhöhen. Der Wirkungsgrad der Rekuperation ist durch das Verhältnis von zurückgewonnener elektrischer Energie und gesamter während des Bremsvorgangs umgewandelter Bewegungsenergie des Fahrzeugs gegeben.

Diese Aufgabe wird durch das erfindungsgemäße Verfahren nach Anspruch 1 gelöst.

Es wird also ein Verfahren bereitgestellt, bei dem eine Steuerung oder Regelung eines Kraftfahrzeugbremssystems durchgeführt wird, welches Reibbremsen an den Rädern mindestens einer Achse umfasst, wobei das Bremsdruckerzeugungsmittel für die Räder mindestens einer Achse in direkter Wirkverbindung zum Bremspedal steht, und mindestens eine elektrische Maschine in Wirkverbindung mit mindestens einer Achse, die unter Aufbringung eines elektrisch-regenerativen Bremsmoments zur Umwandlung von Bewegungsenergie in elektrische Energie eingesetzt werden kann, bei dem zur Steigerung des Wirkungsgrads der Rekuperation eine Erhöhung der regenerativen Verzögerung auch bei unveränderter Bremspedalstellung und/oder Bremspedalkraft erfolgt. Unter dem Begriff Bremsdruckerzeugungsmittel wird beispielsweise ein Tandemhauptbremszylinder oder ein einkreisiger Hauptbremszylinder verstanden. Unter dem Begriff Wirkverbindung wird eine direkte mechanische oder hydraulische Verbindung verstanden, über welche die gesamte für den erzeugten Effekt benötigte Energie aufgebracht wird.

Der Erfindung liegt der Gedanke zugrunde, dass immer ein möglichst großes elektrisch-regeneratives Bremsmoment aufgebracht werden soll, um einen möglichst hohen Anteil der Bewegungsenergie in Form elektrischer Energie zurückzugewinnen. Kann der Generator gegenüber dem Beginn des Bremsvorgangs eine erhöhte regenerative Verzögerung bereitstellen, so soll diese Erhöhung auch bei unveränderter Bremspedalstellung oder Bremspedalkraft erfolgen. Somit steht für nachfolgende Beschleunigungsvorgänge auch mehr elektrische Energie zur Verfügung, die Reichweite des elektrischen Antriebs erhöht sich.

Es ist vorteilhaft, wenn mit abnehmender Geschwindigkeit eine stärkere regenerative Verzögerung angefordert wird, wobei die durch Reibbremsen aufgebaute Verzögerung entsprechend verringert wird. Generatoren mit konstanter Leistung können bei mittleren Geschwindigkeiten eine stärkere Verzögerung bereitstellen als bei hohen Geschwindigkeiten. Ermöglicht das hydraulische Bremssystem einen stufenlosen Druckabbau, so kann der Wirkungsgrad der Rekuperation auch bei gleichbleibender Verzögerung optimiert werden.

Zweckmäßigerweise wird eine Abnahme der Eigenverzögerung des Fahrzeugs durch Erhöhung der regenerativen Verzögerung zumindest kompensiert. Eine Kompensation der verringerten Eigenverzögerung des Fahrzeugs verringert den Bremskomfort für den Fahrer nicht, da bei fester Bremspedalstellung auch die Verzögerung konstant bleibt. Bei hohen Geschwindigkeiten wird die Eigenverzögerung von dem quadratisch mit der Geschwindigkeit ansteigenden Windwiderstand dominiert. Beginnt man daher einen Bremsvorgang mit hoher Geschwindigkeit so nimmt die Verzögerung während des Bremsvorgangs schnell ab, was für den Aufbau zusätzlicher elektrisch-regenerativer Verzögerung genutzt werden kann. Somit steigt die Reichweite des elektrischen Antriebs.

Erfindungsgemäß erfolgt zur Steigerung des Wirkungsgrads der Rekuperation eine Erhöhung der regenerativen Verzögerung auch über das der Bremspedalstellung oder Bremspedalkraft entsprechende Maß hinaus. Geschieht dies insbesondere bei gleichbleibendem Reibbremsmoment, so kann eine Maximierung der zurückgewonnenen elektrischen Energie auch bei Verwendung konventioneller hydraulischer Reibbremsen vorgenommen werden.

Besonders bevorzugt wird die zusätzlich angeforderte Verzögerung in Abhängigkeit von der Geschwindigkeit am Beginn des Bremsvorgangs gewählt. Bei hohen Geschwindigkeiten kann ein Generator konstanter Leistung besonders wenig elektrisch-regenerative Verzögerung aufbringen, weshalb Optimierungen während des Bremsvorgangs eine deutliche Steigerung des Wirkungsgrads ermöglichen.

Besonders bevorzugt wird die zusätzlich angeforderte Verzögerung während des Bremsvorgangs kontinuierlich oder quasikontinuierlich angepasst. Somit kann die vom Generator bei der jeweiligen Geschwindigkeit maximal aufgebrachte Verzögerung während des gesamten Bremsvorgangs optimal genutzt werden. Eine quasi-kontinuierliche Anpassung bedeutet hierbei, dass in gegenüber der Dauer des Bremsvorgangs kurzen Zeitschritten eine geänderte Verzögerung angefordert wird.

Ganz besonders bevorzugt wird die zusätzlich angeforderte Verzögerung proportional zur Geschwindigkeitsänderung seit Beginn des Bremsvorgangs gewählt. Bei starken Bremsungen nimmt die Zusatzverzögerung daher schneller zu als bei schwachen, wodurch insgesamt ein gleichbleibender Wirkungsgrad der Rekuperation nahezu unabhängig von der vom Fahrer angeforderten Verzögerung erreichbar ist.

Insbesondere beträgt die Proportionalitätskonstante etwa 0.05 g bis etwa 0.2 g pro 100 km/h. Die entsprechende Zusatzverzögerung wird vom Fahrer nicht als unangenehm empfunden.

Es ist besonders vorteilhaft, wenn die zusätzlich angeforderte Verzögerung in Abhängigkeit von der Verzögerung am Anfang des Bremsvorgangs gewählt wird. Da der Fahrer Änderungen relativ wahrnimmt, kann bei einer stärkeren Anfangsverzögerung auch eine stärkere Erhöhung stattfinden.

In einer alternativen besonders bevorzugten Ausführungsform der Erfindung wird die zusätzlich angeforderte Verzögerung in Abhängigkeit von der Dauer des Bremsvorgangs gewählt.

Es ist zweckmäßig, wenn die Stabilität des Fahrzustands überprüft wird, insbesondere durch Auswertung von Raddrehzahlinformationen und/oder den Informationen von Beschleunigungs- und/oder Gierratensensoren, und bei Vorliegen eines stabilen Fahrzustands das Bremsmoment an der mit einer elektrischen Maschine in Wirkverbindung stehenden Achse oder Achsen derart gesteuert oder geregelt wird, dass dieses größer ist als das an der oder den nur mit Reibbremsen gebremsten Achse oder Achsen anliegende Bremsmoment, insbesondere die gesamte Verzögerung durch ein elektrisch-regeneratives Bremsmoment aufgebracht wird. Als Kriterium für einen stabilen Fahrzustand kann besonders bevorzugt überprüft werden, ob der Schlupf an der Hinterachse einen vorgegebenen Grenzwert überschreitet. Dann kann auch ein Generator an der Hinterachse bei hinsichtlich der Fahrstabilität unkritischen Bremsungen die gesamte Bremsverzögerung aufbringen, wodurch eine besonders hohe Energierückgewinnung möglich ist.

Besonders zweckmäßig ist es, wenn bei Vorliegen eines stabilen Fahrzustands das Bremsmoment an einer regenerativ gebremsten Hinterachse um bis zu 15% höher eingestellt wird als dem nach einer idealen Bremskraftverteilung anzulegenden Bruchteil des Bremsmoments an der Vorderachse entspricht. Die ideale Bremskraftverteilung gibt das Verhältnis von Vorderrad-Bremsmoment zu Hinterrad-Bremsmoment an, bei welchem der Kraftschluss zwischen Reifen und Fahrbahn optimal ausgenutzt wird. Eine derartige Begrenzung verhindert, dass ein Überbremsen der Hinterachse durch den Generator die Fahrstabilität gefährdet.

Die Erfindung betrifft auch ein Kraftfahrzeugbremssystem umfassend Reibbremsen an den Rädern mindestens einer Achse, wobei das Bremsdruckerzeugungsmittel für die Räder mindestens einer Achse in direkter Wirkverbindung zum Bremspedal steht, und mindestens eine elektrische Maschine in Wirkverbindung mit mindestens einer Achse, die unter Aufbringung eines elektrisch-regenerativen Bremsmoments zur Umwandlung von Bewegungsenergie in elektrische Energie eingesetzt werden kann, wobei eine Ansteuerung oder Regelung entsprechend den vorstehend beschriebenen Verfahren erfolgt.

Die Erfindung betrifft weiterhin die Verwendung eines erfindungsgemäßen Bremssystems in einem Kraftfahrzeug mit Verbrennungsmotor.

Weitere bevorzugte Ausführungsformen ergeben sich aus den Unteransprüchen und der nachfolgenden Beschreibung eines Ausführungsbeispiels an Hand von Figuren.

Es zeigen

Fig. 1    ein Bremssystem zur Durchführung eines erfindungsgemäßen Verfahrens,

Fig. 2    eine typische Generatorkennlinie und

Fig. 3    ein Diagramm zur unterschiedlichen Geschwindigkeitsabhängigkeit von Eigenverzögerung und regenerativer Verzögerung.

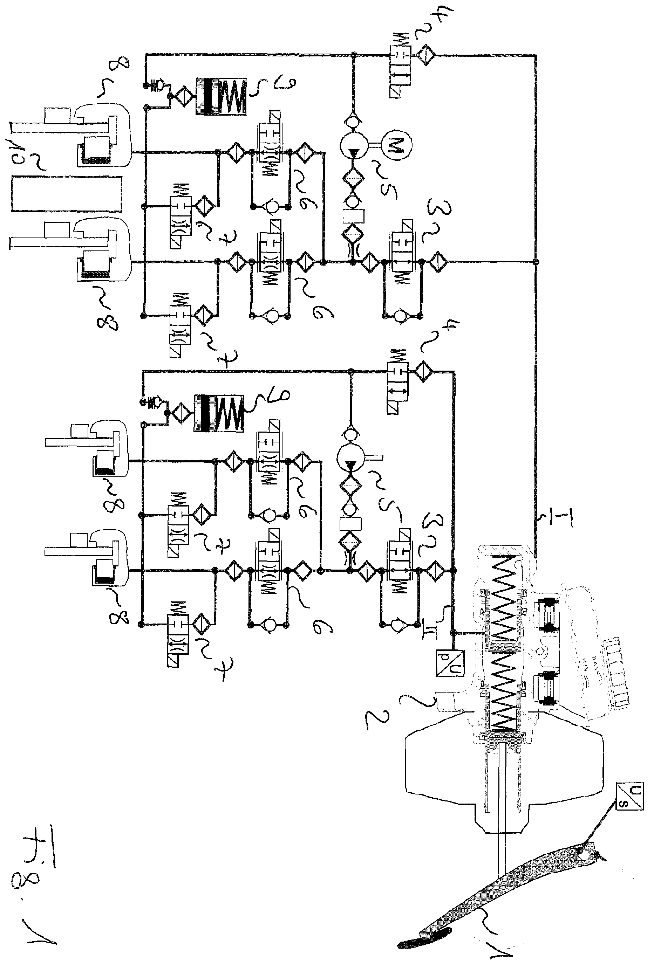

Fig. 1 zeigt ein regeneratives Bremssystem, welches zur Durchführung des erfindungsgemäßen Verfahrens geeignet ist. Das vom Fahrer betätigte Bremspedal 1 wirkt direkt auf einen mit oder ohne Hilfskraft betriebenen Tandemhauptzylinder 2. Dieser baut Druck in zwei im Wesentlichen identischen Bremskreisen I und II auf, wobei diese sowohl achsweise als auch diagonal den Rädern zugeordnet sein können. Die Bremsflüssigkeit fließt durch Trennventile 3 und Einlassventile 6 in die Bremszylinder 8, die eine Reibbremskraft auf die Räder ausüben. Werden die Auslassventile 7 geöffnet, so kann Bremsflüssigkeit in die Niederdruckspeicher 9 abgelassen werden. Die Hydraulikpumpen 5 ermöglichen einen vom Fahrer unabhängigen Druckaufbau, wobei hierzu die Elektronischen Umschaltventile 4 geöffnet und die Trennventile 3 geschlossen werden. An einer der Achsen befindet sich ein elektrischer Generator 10, welcher elektrisch-regeneratives Bremsen ermöglicht.

Durch eine nachfolgend beschriebene geeignete Schaltsequenz ist es möglich, ein für den Fahrer angenehmes Pedalgefühl auch bei regenerativen Bremsvorgängen bereitzustellen. Bei Betätigung der Bremse werden zunächst die Auslassventile 7 geöffnet, woraufhin das vom Fahrer verschobene Volumen von den Niederdruckspeichern 9 aufgenommen wird. Die Bremsverzögerung wird dabei vom Generator bereitgestellt. Übersteigt der aus der Pedalstellung abgeleitete Verzögerungswunsch des Fahrers die maximal mögliche Generatorverzögerung, so werden die Auslassventile 7 geschlossen. Durch die Pedalbetätigung wird daraufhin Druck in den Bremszylindern 8 aufgebaut, und die Reibbremsen stellen das zusätzlich benötigte Bremsmoment bereit.

Aufgrund der direkten Wirkverbindung zwischen Bremspedal und Bremszylinder ist ein Abbau von Druck in den Bremszylindern nicht ohne weiteres möglich, da immer eine Rückwirkung auf das Bremspedal mit entsprechender Beeinträchtigung des Pedalgefühls stattfindet. Weiterhin können die Auslassventile meist nicht fein geregelt werden.

Grundsätzlich kann das erfindungsgemäße Verfahren auch bei Bremssystemen mit einer direkt hydraulisch betätigten und einer elektromechanisch betätigten Bremsanlage eingesetzt werden.

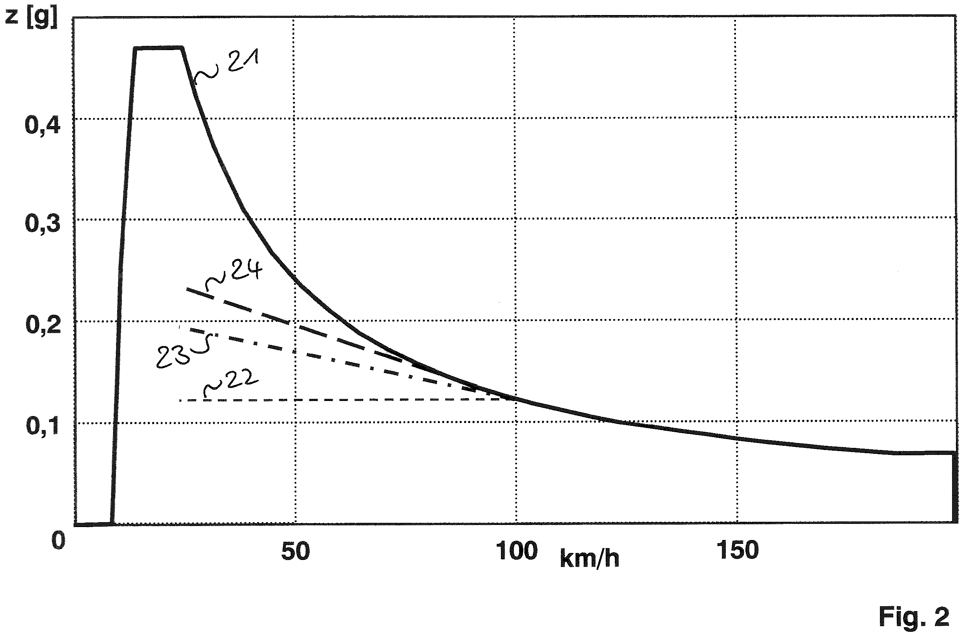

In Fig.2 ist als durchgezogene Linie 21 eine typische Kennlinie eines Generators gezeigt, wobei eine im Wesentlichen konstante Generatorleistung von 50 kW angenommen ist. Ein Fahrzeug mit solch einer elektrischen Maschine könnte alleine von dieser angetrieben werden; ist auch ein Verbrennungsmotor vorhanden, wird von einem Voll-Hybrid-Fahrzeug gesprochen. Unterhalb einer Grenzgeschwindigkeit von etwa 15 km/h nimmt die Verzögerung des Generators stark ab, weshalb in diesem Geschwindigkeitsbereich nur die Reibbremsen angesteuert werden. Oberhalb der Grenzgeschwindigkeit kann der Generator maximal eine Verzögerung von

$$b_{gen,\max} = \frac{P}{mv}$$

aufbringen, wobei $P$ die Generatorleistung, $m$ die Fahrzeugmasse und $v$ die Fahrzeuggeschwindigkeit bezeichnen.

Beginnt der Fahrer bei einer Geschwindigkeit von 100 km/h einen Bremsvorgang, so kann der Generator nur eine geringe regenerative Verzögerung bereitstellen. Bei einer starken Bremsung auf 20 km/h folgt die aufgebrachte Verzögerung der kurz gestrichelten Linie 22, wenn man das Verhältnis der Bremsverzögerungen zwischen Reibbremse und Generator konstant hält. Der Wirkungsgrad der Rekuperation ist geringer als es möglich wäre, da dann nur ein Teil der bei niedrigen Geschwindigkeiten abrufbaren Generatorverzögerung genutzt wird.

Daher ist es zweckmäßig, mit abnehmender Geschwindigkeit die angeforderte regenerative Verzögerung zu erhöhen, bis die Grenzgeschwindigkeit von 15 km/h erreicht ist. Eine besonders bevorzugte Vorgehensweise besteht darin, in Abhängigkeit von der Dauer $t$ des Bremsvorgangs eine zusätzliche Generatorverzögerung $b_{Zusatz}$ von

$$b_{Zusatz} = a \cdot t$$

anzufordern, wobei $a$ eine geeignet gewählte Konstante bezeichnet. Bei einer schwachen, also lang andauernden Bremsung auf 20 km/h würde sich die gestrichelte Linie 24 ergeben. Dies bedeutet einen deutlich erhöhten Wirkungsgrad der Rekuperation bei moderatem Steuerungs- bzw. Regelaufwand. Wenn der Fahrer stärker bremst, wodurch eine Verringerung der Geschwindigkeit auf 20 km/h also in kürzerer Zeit stattfindet, folgt die aufgebrachte Verzögerung der strichpunktierten Linie 23. Bei starken Bremsungen verringert sich der Wirkungsgrad der Rekuperation also deutlich.

Da der Fahrer in erster Linie eine relative Zusatzverzögerung bemerkt, ist es daher besonders vorteilhaft, die zusätzlich angeforderte Generatorverzögerung $b_{extra}$ in Abhängigkeit von der seit Beginn des Bremsvorgangs erfolgten Geschwindigkeitsänderung zu wählen,

$$b_{extra} = a_{extra} \cdot (v_0 - v_{aktuell}) \, ,$$

wobei $a_{extra}$ eine geeignet gewählte Konstante, $v_0$ die Fahrzeuggeschwindigkeit am Anfang des Bremsvorgangs und $v_{aktuell}$ die momentane Fahrzeuggeschwindigkeit bezeichnet. Somit wird unabhängig von der Stärke der Bremspedalbetätigung ein gleichbleibend hoher Wirkungsgrad der Rekuperation erzielt. Lediglich bei Vorliegen niedriger Reibwerte der Fahrbahnoberfläche ergeben sich Einschränkungen, da das Eingreifen von Fahrstabilitätsregelungen wie ABS oder ESP grundsätzlich ein Abschalten des Generators bedingt.

Eine angeforderte Zusatzverzögerung darf dabei nicht zu stark sein, da sonst das Pedalgefühl des Fahrers beeinträchtigt wird; eine bei gleichbleibender Pedalstellung erhöhte Bremskraft entspricht nicht dem von konventionellen Bremsanlagen bekannten Verhalten. In Fahrversuchen hat sich gezeigt, dass eine Verzögerung von 0.05 g (also 5% der Erdbeschleunigung) vom Fahrer noch nicht als unangenehm empfunden wird.

Auch ohne Bremsbetätigung wirkt auf das Fahrzeug eine Eigenverzögerung

$$b_{drag} = a_2 v^2 + a_1 v + a_0 \, ,$$

die mittels der Parameter $a_2$, $a_1$ und $a_0$ beschrieben wird und durch Windwiderstand, Rollwiderstand usw. verursacht wird. Bei hohen Geschwindigkeiten ist die Eigenverzögerung wegen des Windwiderstands deutlich höher als bei niedrigen Geschwindigkeiten, was durch den $v^2$-Term beschrieben wird. Diese Abnahme der Eigenverzögerung bei einem Bremsvorgang kann durch eine Erhöhung der angeforderten Generatorverzögerung kompensiert werden. Somit kann der Wirkungsgrad der Rekuperation erhöht werden, ohne ein für den Fahrer ungewohntes Bremsgefühl hervorzurufen.

Bei schwachen Bremsungen kann der Generator prinzipiell die gesamte gewünschte Verzögerung bereitstellen, so dass der Wirkungsgrad der Rekuperation häufig bereits optimal ist. Um ein von der Stärke der Pedalbetätigung unbeeinflusste Geschwindigkeitsabhängigkeit der Gesamtverzögerung, also ein konsistentes Verhalten der Bremsanlage bereitzustellen, kann zweckmäßigerweise auch dann eine erhöhte Generatorverzögerung angefordert werden.

Im Hinblick auf eine möglichst einfache Regelung des regenerativen Bremsvorgangs ist es vorteilhaft, für die Kompensation der verringerten Eigenverzögerung und die zusätzlich angeforderte regenerative Verzögerung eine Formel festzulegen, die zur Steuerung oder Regelung der angeforderten regenerativen Verzögerung ausgewertet wird. Nachfolgend ist ein Beispiel für eine entsprechende Formel angegeben.

Die angeforderte regenerative Verzögerung $b_{angefordert}$ kann nicht größer sein als die mit abnehmender Geschwindigkeit zunehmende Generatorverzögerung:

$$-\frac{db_{angefordert}}{dv} \leq -\frac{db_{gen,\max}}{dv} = \frac{P}{mv^2}$$

Gleichzeitig muss die angeforderte regenerative Verzögerung mindestens eine Änderung der Eigenverzögerung kompensieren, um eine sinnvoll erhöhte Energierückgewinnung bereitzustellen:

$$-\frac{db_{angefordert}}{dv} \geq +\frac{db_{drag}}{dv} = 2a_2 v + a_1$$

Es ist vorteilhaft, eine zusätzliche Konstante $a_{extra}$ zu addieren, da dies eine weitere Erhöhung des Wirkungsgrads der Rekuperation ermöglicht.

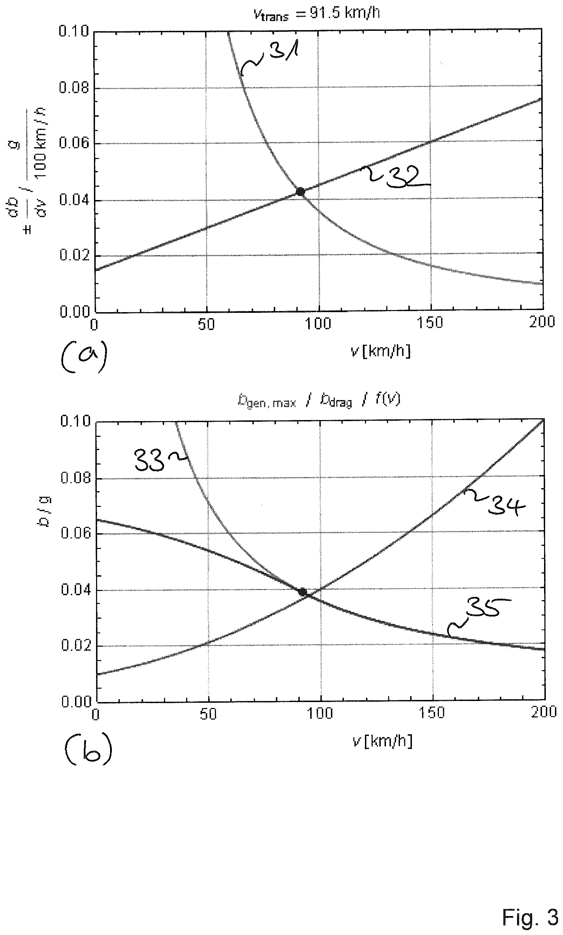

In Fig. 3 a) ist die geschwindigkeitsabhängige Änderung des Terms zur Generatorverzögerung als Linie 31 und die des Terms zur Eigenverzögerung als Linie 32 gezeigt, wobei hier die zusätzliche Konstante einbezogen wurde. Bei einer Geschwindigkeit $v_{transition}$ schneiden sich die beiden Kurven:

$$\frac{P}{mv_{transition}^2} = 2a_2 v_{transition} + a_1 + a_{extra}$$

Diese Geschwindigkeit hängt nur von Größen ab, die vom Hersteller des Fahrzeugs gemessen oder in der Konzeptionsphase festgelegt werden, daher kann $v_{transition}$ vor Beginn der Serienfertigung unter Verwendung bekannter Methoden berechnet werden.

Berücksichtigt man, dass jeweils die niedrigere der beiden Linien aus Fig. 3a) relevant ist, so lässt sich die Formel für die zusätzlich anzufordernde regenerative Verzögerung bestimmen:

$$b_{angefordert} = \int_{v_0}^{v} \frac{db_{angefordert}}{dv} dv = f(v) - f(v_0)$$

mit

$$f(v) = \begin{cases} \dfrac{P}{mv} & (v \geq v_{transition}) \\ \dfrac{P}{mv_{transition}} + a_2(v_{transition}^2 - v^2) + (a_1 + a_{extra})(v_{transition} - v) & (v < v_{transition}) \end{cases}$$

In Fig. 3 b) sind vom Generator maximal aufgebrachte Verzögerung 33, die Eigenverzögerung des Fahrzeugs 34 und der Verlauf von f(v) 35 dargestellt. Während bei hohen Geschwindigkeiten die verfügbare regenerative Verzögerung optimal genutzt wird, kann dies bei niedrigen Geschwindigkeiten nur eingeschränkt geschehen, ohne das Bremsverhalten in für den Fahrer unangenehmer Weise zu beeinträchtigen.

Die Formel für $b_{angefordert}$ wird bevorzugt im Steuergerät gespeichert, so dass während der Fahrt nur die Fahrzeuggeschwindigkeit $v_0$ zum Beginn der Bremsung und die momentane Fahrzeuggeschwindigkeit $v$ ermittelt werden müssen. Zweckmäßigerweise wird für $a_{extra}$ ein Wert von etwa 0.1 g pro 100 km/h festgelegt. Gegenüber der Bremsung ohne Zusatzanforderung ist der Wirkungsgrad der Rekuperation deutlich erhöht, ohne Verringerung des Fahrkomforts.

**Patentansprüche**

1. Verfahren, bei dem eine Steuerung oder Regelung eines Kraftfahrzeugbremssystems durchgeführt wird, welches Reibbremsen an den Rädern mindestens einer Achse umfasst, wobei das Bremsdruckerzeugungsmittel für die Räder mindestens einer Achse in direkter Wirkverbindung zum Bremspedal steht, und mindestens eine elektrische Maschine in Wirkverbindung mit mindestens einer Achse, die unter Aufbringung eines elektrisch-regenerativen Bremsmoments zur Umwandlung von Bewegungsenergie in elektrische Energie eingesetzt werden kann, **dadurch gekennzeichnet, dass** zur Steigerung des Wirkungsgrads der Rekuperation eine Erhöhung der regenerativen Verzögerung auch bei unveränderter Bremspedalstellung und/oder Bremspedalkraft über das der Bremspedalstellung oder Bremspedalkraft entsprechende Maß hinaus erfolgt, insbesondere in der Weise, dass das Bremsmoment der Reibbremse dabei konstant gehalten wird.

2. Verfahren nach Anspruch 1, **dadurch gekennzeichnet, dass** mit abnehmender Geschwindigkeit eine stärkere regenerative Verzögerung angefordert wird, wobei die durch Reibbremsen aufgebaute Verzögerung entsprechend verringert wird.

3. Verfahren nach Anspruch 1 oder 2, **dadurch gekennzeichnet, dass** eine Abnahme der Eigenverzögerung des Fahrzeugs durch Erhöhung der regenerativen Verzögerung zumindest kompensiert wird.

4. Verfahren nach einem der Ansprüche 1 bis 3, **dadurch gekennzeichnet, dass** die zusätzlich angeforderte Verzögerung in Abhängigkeit von der Geschwindigkeit am Beginn des Bremsvorgangs gewählt wird.

5. Verfahren nach einem der Ansprüche 1 bis 4, **dadurch gekennzeichnet, dass** die zusätzlich angeforderte Verzögerung während des Bremsvorgangs kontinuierlich oder quasi-kontinuierlich angepasst wird.

6. Verfahren nach Anspruch 5, **dadurch gekennzeichnet, dass** die zusätzlich angeforderte Verzögerung proportional zur Geschwindigkeitsänderung seit Beginn des Bremsvorgangs gewählt wird.

7. Verfahren nach Anspruch 6, **dadurch gekennzeichnet, dass** die Proportionalitätskonstante etwa 0.05 g bis etwa 0.2 g pro 100 km/h beträgt.

8. Verfahren nach einem der Ansprüche 1 bis 7, **dadurch gekennzeichnet, dass** die zusätzlich angeforderte Verzögerung in Abhängigkeit von der Verzögerung am Anfang des Bremsvorgangs gewählt wird.

9. Verfahren nach einem der Ansprüche 1 bis 8, **dadurch gekennzeichnet, dass** die zusätzlich angeforderte Verzögerung in Abhängigkeit von der Dauer des Bremsvorgangs gewählt wird.

10. Verfahren nach einem der vorhergehenden Ansprüche, **dadurch gekennzeichnet, dass** die Stabilität des Fahrzustands überprüft wird, insbesondere durch Auswertung von Raddrehzahlinformationen und/oder den Informationen von Beschleunigungs- und/oder Gierratensensoren, bei Vorliegen eines stabilen Fahrzustands das Bremsmoment an der mit einer elektrischen Maschine in Wirkverbindung stehenden Achse oder Achsen derart gesteuert oder geregelt wird, dass dieses größer ist als das an der oder den nur mit Reibbremsen gebremsten Achse oder Achsen anliegende Bremsmoment, insbesondere die gesamte Verzögerung durch ein elektrisch-regeneratives Bremsmoment aufgebracht wird.

11. Verfahren nach Anspruch 10, **dadurch gekennzeichnet, dass** bei Vorliegen eines stabilen Fahrzustands das Bremsmoment an einer regenerativ gebremsten Hinterachse um bis zu 15% höher eingestellt wird als dem nach einer idealen Bremskraftverteilung anzulegenden Bruchteil des Bremsmoments an der Vorderachse entspricht.

12. Kraftfahrzeugbremssystem umfassend Reibbremsen an den Rädern mindestens einer Achse, wobei das Bremsdruckerzeugungsmittel für die Räder mindestens einer Achse in direkter Wirkverbindung zum Bremspedal steht, und mindestens eine elektrische Maschine in Wirkverbindung mit mindestens einer Achse, die unter Aufbringung eines elektrisch-regenerativen Bremsmoments zur Umwandlung von Bewegungsenergie in elektrische Energie eingesetzt werden kann, **dadurch gekennzeichnet, dass** eine Ansteuerung oder Regelung nach mindestens einem der vorhergehenden Ansprüche erfolgt.

13. Verwendung eines Bremssystems nach Anspruch 12 in einem Kraftfahrzeug mit Verbrennungsmotor.

**Claims**

1.  Method in which open- or closed-loop control of a motor vehicle brake system is carried out which comprises friction brakes on the wheels of at least one axle, wherein the brake pressure generating means for the wheels of at least one axle are in a direct operative connection to the brake pedal, and at least one electric machine is in an operative connection to at least one axle which can be used by applying an electrically regenerative braking torque for converting kinetic energy into electrical energy, **characterized in that** in order to raise the efficiency level of the recuperation, the regenerative deceleration is increased even in the case of an unchanged brake pedal position and/or brake pedal force beyond the amount corresponding to the brake pedal position or brake pedal force, in particular in such a way that the braking torque of the friction brake is kept constant in the process.

2.  Method according to Claim 1, **characterized in that** as the speed decreases a greater regenerative deceleration is requested, wherein the deceleration which is built up by friction brakes is correspondingly reduced.

3.  Method according to Claim 1 or 2, **characterized in that** a decrease in the vehicle's own deceleration is at least compensated by increasing the regenerative deceleration.

4.  Method according to one of Claims 1 to 3, **characterized in that** the additionally requested deceleration is selected as a function of the speed at the start of the braking process.

5.  Method according to one of Claims 1 to 4, **characterized in that** the additionally requested deceleration is adapted continuously or quasi-continuously during the braking process.

6.  Method according to Claim 5, **characterized in that** the additionally requested deceleration is selected in proportion to the change in speed since the start of the braking process.

7.  Method according to Claim 6, **characterized in that** the proportionality constant is approximately 0.05 g to approximately 0.2 g per 100 km/h.

8.  Method according to one of Claims 1 to 7, **characterized in that** the additionally requested deceleration is selected as a function of the deceleration at the start of the braking process.

9.  Method according to one of Claims 1 to 8, **characterized in that** the additionally requested deceleration is selected as a function of the duration of the braking process.

10. Method according to one of the preceding claims, **characterized in that** the stability of the driving state is checked, in particular by evaluating wheel speed information and/or the information from acceleration and/or yaw rate sensors, when a stable driving state is present the braking torque at the axle or axles in an operative connection with an electric machine is open-loop or closed-loop controlled in such a way that said braking torque is greater than the braking torque present at the axle or axles braked only with friction brakes, in particular the entire deceleration is applied by an electrically regenerative braking torque.

11. Method according to Claim 10, **characterized in that** when a stable driving state is present, the braking torque at a regeneratively braked rear axle is set up to 15% higher than corresponds to the fraction of the braking torque at the front axle which is to be applied according to an ideal braking force distribution.

12. Motor vehicle brake system comprising friction brakes on the wheels of at least one axle, wherein the brake pressure generating means for the wheels of at least one axle are in a direct operative connection to the brake pedal, and at least one electric machine is in an operative connection to at least one axle which can be used by applying an electrically regenerative braking torque for converting kinetic energy into electrical energy, **characterized in that** actuation or closed-loop control takes place according to at least one of the preceding claims.

13. Use of a brake system according to Claim 12 in a motor vehicle having an internal combustion engine.

**Revendications**

1.  Procédé dans lequel est effectuée une commande ou une régulation d'un système de freinage de véhicule automobile qui comprend des freins à friction au niveau des roues d'au moins un essieu, le moyen de génération de pression de freinage des roues d'au moins un essieu étant en liaison fonctionnelle directe avec la pédale de frein et au moins une machine électrique étant en liaison fonctionnelle avec au moins un essieu qui peut être utilisé pour convertir de l'énergie cinétique en énergie électrique par application d'un couple de freinage à régénération électrique, **caractérisé en ce que**, pour augmenter l'efficacité de la récupération, une augmentation de la décélération régénérative est effectuée, même avec une position de pédale de frein et/ou une force de pédale de frein inchangées, au-delà de la mesure correspondant à la position de pédale de frein ou la force de pédale de frein, en particulier de telle sorte que le couple de freinage du frein à friction soit maintenu constant.

2. Procédé selon la revendication 1, **caractérisé en ce que** plus la vitesse diminue, plus la décélération régénérative demandée augmente, la décélération établie par les freins à friction étant réduite en conséquence.

3. Procédé selon la revendication 1 ou 2, **caractérisé en ce qu'**une diminution de la décélération propre du véhicule est au moins compensée par une augmentation de la décélération régénérative.

4. Procédé selon l'une des revendications 1 à 3, **caractérisé en ce que** la décélération supplémentaire demandée est choisie en fonction de la vitesse au début du processus de freinage.

5. Procédé selon l'une des revendications 1 à 4, **caractérisé en ce que** la décélération supplémentaire demandée est ajustée de manière continue ou quasi continue pendant le processus de freinage.

6. Procédé selon la revendication 5, **caractérisé en ce que** la décélération supplémentaire demandée est choisie proportionnellement à la variation de vitesse depuis le début du processus de freinage.

7. Procédé selon la revendication 6, **caractérisé en ce que** la constante de proportionnalité est d'environ 0,05 g à environ 0,2 g pour 100 km/h.

8. Procédé selon l'une des revendications 1 à 7, **caractérisé en ce que** la décélération supplémentaire demandée est choisie en fonction de la décélération au début du processus de freinage.

9. Procédé selon l'une des revendications 1 à 8, **caractérisé en ce que** la décélération supplémentaire demandée est choisie en fonction de la durée du processus de freinage.

10. Procédé selon l'une des revendications précédentes, **caractérisé en ce que** la stabilité de la condition de roulement est vérifiée, notamment par évaluation des informations de vitesse de rotation de roue et/ou des informations de capteurs d'accélération et/ou de taux de lacet, **en ce que** le couple de freinage au niveau de l'essieu ou des essieux qui sont en liaison fonctionnelle avec une machine électrique est commandé ou régulé en présence d'une condition de roulement stable de manière à être supérieur au couple de freinage appliqué sur l'essieu ou les essieux freinés avec des freins à friction, en particulier **en ce que** toute la décélération est appliquée par un couple de freinage à régénération électrique.

11. Procédé selon la revendication 10, **caractérisé en ce que**, en présence d'une condition de roulement stable, le couple de freinage appliqué sur un essieu arrière freiné de manière régénérative est réglé pour être jusqu'à 15 % supérieur à la fraction du couple de freinage à appliquer sur l'essieu avant selon une distribution de force de freinage idéale.

12. Système de freinage de véhicule automobile comprenant des freins à friction au niveau des roues d'au moins un essieu, le moyen de génération de pression de freinage des roues d'au moins un essieu étant en liaison fonctionnelle directe avec la pédale de frein, et au moins une machine électrique qui est en liaison fonctionnelle avec au moins un essieu et qui peut être utilisée pour convertir de l'énergie cinétique en énergie électrique par application d'un couple de freinage à régénération électrique, **caractérisé en ce qu'**une commande ou une régulation est effectuée conformément à l'une au moins des revendications précédentes.

13. Utilisation d'un système de freinage selon la revendication 12 dans un véhicule automobile comprenant un moteur à combustion interne.

Fig. 1

Fig. 2

$v_{trans} = 91.5$ km/h

(a)

$b_{gen,max}$ / $b_{drag}$ / $f(v)$

(b)

Fig. 3

**EP 2 621 780 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004101308 A1
- DE 102004044599 A1
- WO 2006076999 A1
- US 20100105520 A1